# EUROPEAN PATENT APPLICATION

(11) **EP 0 849 171 A1**
(43) Date of publication of application: **24.06.1998**
(21) Application number: 97122054.6
(22) Date of filing: 15.12.1997
(51) Int. Cl.: B64G 1/50, B64G 1/22

(54) **Double sided radiator for use in a functionally independent spacecraft module**

(30) Priority: 20.12.1996 US 770865
(71) Applicant: TRW Inc., Redondo Beach, California 90278 (US)
(72) Inventor: Lee, David W. Y., Torrance, CA 90505 (US)
(74) Representative: Schmidt, Steffen J., Dipl.-Ing.

(57) **Abstract**

A spacecraft electronics equipment module constructed on a double-sided radiator panel, with which electronics components are directly integrated. The double-sided radiator cools the components more efficiently and the module is lighter and smaller than modules that must be cooled by other means. The concept of a double-sided radiator with integrated electronics is disclosed in the context of a functionally independent spacecraft module, which is structurally and thermally independent of the spacecraft core structure to which it is attached. The double-sided radiator enhances the thermal independence of the module.

## Description

### BACKGROUND OF THE INVENTION

This invention relates generally to a modular approach to the design of spacecraft and, more particularly, to difficulties in adequately cooling spacecraft electronic equipment modules. Conventional spacecraft designs have placed electronic equipment on panels located inside box-like modules, with the panels typically forming the walls of the modules. The modules are mounted onto a spacecraft and coupled together with complex interconnecting wiring. Heat dissipated from the electronics equipment is conducted into the module and radiates into space. The size of each module is determined in part by the heat radiating area needed to cool the equipment, so there is often unused volume within each module box or compartment. Because only one side of the equipment panel is used as a radiator, the modules often have to be very large to maintain desired operating temperatures. In some designs, heat-conducting pipes are used to transit thermal energy from the modules to separate double-sided radiator panels, but this modification adds more weight and volume to the spacecraft. Clearly, an alternative approach is needed and the present invention addresses this need.

### SUMMARY OF THE INVENTION

The present invention resides in a spacecraft equipment module that is constructed on a double-sided radiator panel, on which electronic equipment is directly mounted. Briefly, and in general terms, the module of the invention comprises a generally planar, double-sided radiator panel capable of attachment to a spacecraft core structure, and an electronics unit integrated into the panel by mechanical attachment in close contact with the panel surface. Heat dissipated by the electronics unit is conducted directly into the panel and radiated away from the module in two principal directions.

Preferably, the module further includes at least one heatpipe attached to the panel, for distributing heat more uniformly across the panel. The preferred embodiment of the invention also includes a radiation shield covering the electronics unit, and also providing an expanded radiation area.

It will be appreciated from the foregoing that the present invention represents a significant advance in spacecraft design. In particular, the invention provides an electronics equipment module with a double-sided radiator that cools the integrated electronics equipment more efficiently and is lighter and smaller than conventional equipment modules for spacecraft. Other aspects and advantages of the invention will become apparent from the following more detailed description, taken in conjunction with the drawings.

### BRIEF DESCRIPTION OF THE DRAWINGS

FIG. 1 is an isometric view of a spacecraft module in accordance with a preferred embodiment of the present invention;
FIG. 2 is a cross-sectional view taken generally along the line 2-2 of FIG. 1 and depicting an electronics payload component housed on the spacecraft module; and
FIG. 3 is an exploded isometric view of a spacecraft configuration employing modules in accordance with the invention and depicting various available components.

### DESCRIPTION OF THE PREFERRED EMBODIMENT

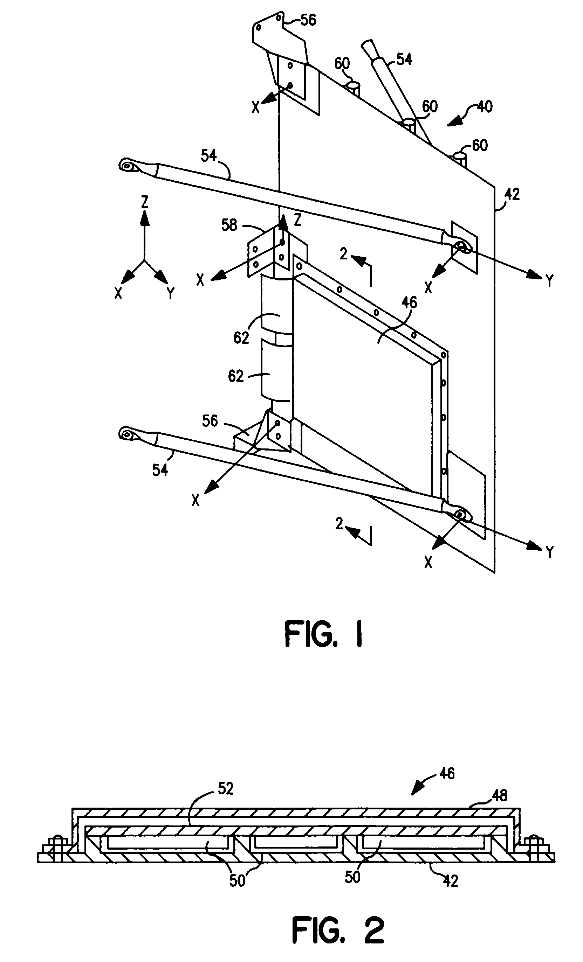

As shown in the drawings for purposes of illustration, the present invention pertains to a novel, more efficiently cooled spacecraft module. FIG. 1 depicts the structural details of a spacecraft avionics module 40 in accordance with the invention, which can be used to advantage in various configurations of spacecraft. The module 40 is structured on a flat, generally rectangular radiator panel 42, which attaches to a parent structure (not shown). The parent structure can be very simple and light in weight because each module 40 is structurally self-sufficient from its points of attachment to the parent structure 44.

In accordance with the invention the module 40, through its radiator panel 42, radiates thermal energy from both of its faces and includes an electronics element 46 mounted on the panel 42 and protected by a radiation cover 48. The electronics element 46, as shown in FIG. 1, includes electronic and RF elements 50 mounted on a circuit board 52 installed under the cover 48. The module 40 has a set of structural supporting brackets 54, 56 and 58 for attachment to the parent structure 44. Heat pipes, portions of which are shown at 60, can be used to increase the thermal efficiency and capacity of the radiator 42 by distributing heat across the entire panel.

Interfaces, shown diagrammatically at 62, are provided for connection to a "backbone" structure (not shown in FIG. 1), through which multiple modules are interconnected and attached to the parent spacecraft structure 44. This disciplined interconnection interface replaces wiring harnesses presently used to interconnect modules. Although various configurations are contemplated, by way of example the interfaces 62 can provide payload, RF and power connections to the module 40, through connectors that are effectively shielded against electromagnetic interference (EMI). Each module 40 is designed to be structurally self-sufficient, to have integral thermal control and switching capability, and stand-alone power management capability. Data interface to the module 40 is made through a commercially available data bus (not shown).

For a particular system design, modules 40 can be added or deleted without impacting the complexity of the design at a system level. The only significant limiting factor is the maximum capacity of the parent structure 44 and any associated solar arrays. In effect, the modular design of the system tends to move complexity inside the individual module boundaries and dramatically reduce system level complexity and design requirements.

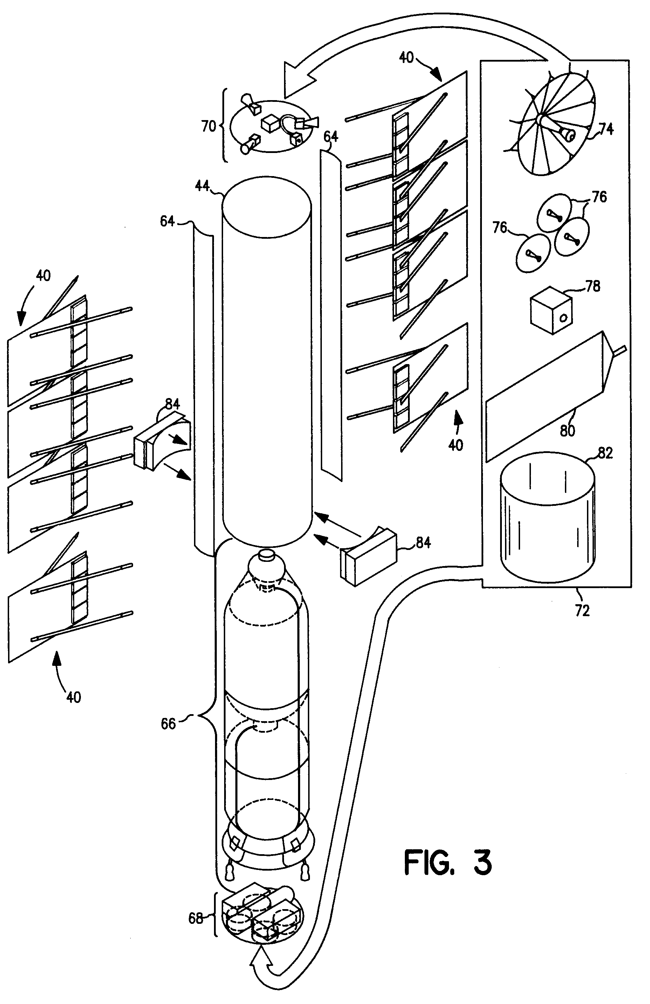

FIG. 3 is an exploded view of a spacecraft designed to include modules 40 in accordance with the invention. In this illustrative configuration, the modules 40 are arranged in two rows on diametrically opposite sides of the cylindrical parent structure 44. The strips 64 are part of the power/data/payload interface backbone mentioned above. The configuration illustrated is a useful one because it orients all of the modules to radiate in two opposed directions. In the case of an earth-orbiting satellite, in an equatorial or nearly equatorial orbit, sunlight falls on the vehicle alternately from the east and west directions. The north and south exposures of the spacecraft are those that are least subject to the sun's radiation and, therefore, are most useful for radiating thermal energy from the vehicle.

The exploded view of FIG. 3 shows other aspects of the spacecraft's modular design. A chemical propulsion system 66 is housed inside the cylindrical parent structure 44 and an electrical propulsion system 68 is mounted at the aft end of the structure 44. Indicated at 70 is a standard attitude control system (ACS) module, which is end-mounted onto the parent structure 44. Other components shown within the rectangle 72 may be either end-mounted or side-mounted. These include a single umbrella antenna 74, multiple antenna dishes 76, payload instruments 78, an articulated, flat-panel solar array 80 and a fixed, cylindrical solar array 82. Shown for mounting on the outer cylindrical face of the parent structure 44 is a pair of battery modules 84.

It will be appreciated from the foregoing that the present invention represents a significant advance in the field of spacecraft design. In particular, the invention provides for more efficient cooling of electronics equipment modules on spacecraft, by providing a smaller, lighter, double-sided radiator with which the electronics equipment are directly integrated. It will also be appreciated that, although a specific embodiment of the invention has been illustrated, various modifications may be made without departing from the spirit and scope of the invention. Accordingly, the invention should not be limited, except as by the appended claims.

## Claims

1. A spacecraft electronic equipment module, comprising:
a generally planar, double-sided radiator panel capable of attachment to a spacecraft core structure; and
an electronics unit integrated into the panel by mechanical attachment in close contact with the panel;
wherein heat dissipated by the electronics unit is conducted directly into the panel and radiated away from the module in two principal directions.

2. A spacecraft electronic equipment module as defined in claim 1, and further comprising:
at least one heatpipe attached to the panel, for distributing heat more uniformly across the panel.

3. A spacecraft electronic equipment module as defined in claim 1, and further comprising:
a radiation shield covering the electronics unit and providing an expanded thermal radiation area.
